# EUROPEAN PATENT SPECIFICATION

(11) **EP 0 885 433 B1**
(45) Date of publication and mention of the grant of the patent: **30.08.2006**
(21) Application number: 96936642.6
(22) Date of filing: 17.10.1996
(51) Int. Cl.: B65D 55/02

(54) **BOTTLE COVER WITH INTEGRATED EAS MARKER**
FLASCHENDECKFOLIE MIT INTEGRIERTEM MARKIERUNGSETIKETT
COUVRE-BOUTEILLE AVEC MARQUEUR DE SYSTEME ELECTRONIQUE DE SURVEILLANCE D'ARTICLES INTEGRE

(30) Priority: 20.10.1995 FR 9512402
(43) Date of publication of application: 23.12.1998
(73) Proprietor: Sensormatic Electronics Corporation, Boca Raton, Florida 33487 (US)
(72) Inventor: DAMEME, Alain, F-95200 Cergy-Saint-Christophe (FR)
(74) Representative: Hafner, Dieter
(86) International application number: PCT/US1996/016663
(87) International publication number: WO 1997/015035

(56) References cited:
- EP-A- 0 619 243
- US-A- 4 118 693
- US-A- 4 134 538
- US-A- 4 158 434
- US-A- 4 660 025
- US-A- 5 331 313
- US-A- 5 499 015
- US-A- 5 500 640
- US-A- 5 519 381

## Description

### FIELD OF THE INVENTION

This invention relates to electronic article surveillance (EAS), and more particularly, to techniques for securing EAS markers to goods which are to be protected from theft.

### BACKGROUND OF THE INVENTION

It is known to provide electronic article surveillance systems in which detecting devices are installed at the exits of retail stores. EAS markers that are detectable by the detecting devices are secured to articles of merchandise which are to be protected from theft. When a customer pays for an article of merchandise, the EAS marker secured to the article of merchandise is either removed or deactivated according to known techniques. The article can then be carried past the detecting devices without actuating an alarm.

Articles of merchandise in the form of bottles, and particularly wine bottles or other beverage bottles, present particular challenges in terms of securing EAS markers to the bottles. For the most part, EAS markers are provided in a form which is suitable for attachment to a large flat surface (such as the cover of a compact disc) or in a device which is attachable to soft goods such as clothing. Of course, a wine bottle is not soft, and lacks flat surfaces to which conventional EAS markers can be readily attached. French Patent Application No. 2,703,659 proposes a bottle cap arrangement for a wine bottle, with an anti-theft circuit mounted in the cap arrangement at a position above the opening of the bottle. However, the anti-theft circuits shown in the '659 French application appear to be incompatible with the most widely installed types of EAS detection equipment, and also appear to be of types which would be masked and rendered ineffective if the top of the bottle is covered with a metal foil, as is often done with champagne and other kinds of wine bottles.

### OBJECTS AND SUMMARY OF THE INVENTION

US 3,765,007 discloses a marker comprising a marker element for mounting under a cover portion of an object to be protected so as to conceal the marker so as to prevent unauthorized removal. The marker element is being selected to provide a signal that is detectable by an electronic article surveillance system. The concept of attaching the marker to any object is taught in general, but it does not disclose any detail for attaching a marker element on a bottle.

It is accordingly an object of the invention to provide an improved technique for securing an EAS marker to a bottle to be protected from theft, to provide a technique for conveniently securing to a wine bottle an EAS marker that is compatible with an installed base of EAS detection equipment, wherein

According to an aspect of the invention, bottle cover is provided for a top and neck of a bottle to be protected from theft, including a top portion for at least partially covering an opening of the bottle, a skirt portion, extending downwardly from the top portion, for at least partially covering the neck of the bottle, and a marker element mounted to the skirt portion, with the marker element being selected to provide a signal that is detectable by an electronic article surveillance system, and wherein the skirt portion includes a seam formed by overlapping of two edge portions of a sheet rolled to form the skirt portion, and the marker element is positioned between the overlapping edge portions so as to be covered by an outer one of the two edge portions. The bottle cover may further include an adhesive layer for attaching the overlapping edge portions to each other, and the adhesive layer may be provided in the form of two-sided adhesive tape.

According to another aspect of the invention, there is provided a method of forming a bottle cover for a top and neck of a bottle to be protected from theft, including the steps of providing a pre-cut sheet of material, forming a layer of adhesive material along a first edge of the sheet on one side of the sheet, mounting on the layer of adhesive material an elongate marker element extending in parallel to the first edge of the sheet, the marker element being selected to provide a signal that is detectable by an electronic article surveillance system, and rolling the sheet to bring the layer of adhesive material into adhering contact with a portion of a second side of the sheet along a second edge of the sheet, with the marker element engaged between the layer of adhesive material and the portion of the second side of the sheet. Further in accordance with the latter aspect of the invention, the pre-cut sheet of material may be in the shape of a ring segment having an outer arcuate edge and an inner arcuate edge concentric with the outer arcuate edge and with the first edge of the sheet extending between respective ends of the outer and inner arcuate edges. Also, the inner arcuate edge may be serrated to provide a plurality of tab portions along the inner arcuate edge and the method according to this aspect of the invention may include the step of folding the tab portions to form a top portion of the bottle cover.

The marker element provided according to either of the above aspects of the invention may be a continuous strip of magnetic material or may include a magnetostrictive member and a biasing member mounted spaced apart from said magnetostrictive member, said biasing member, when magnetically biased, for causing said magnetostrictive member to be mechanically resonant when exposed to an alternating electromagnetic field generated at a selected frequency by an electronic article surveillance system.

According to still another aspect of the invention, there is provided a bottle cover for a bottle to be protected from theft, including sheeting material shaped to correspond, at least partially, to top and neck portions of the bottle, and an EAS marker element secured to the sheeting material, with the marker element being formed of a magnetic material having a magnetic hysteresis loop with a large Barkhausen discontinuity such that exposure of the element to an external magnetic field, whose field strength in the direction opposing the magnetic polarization of the element exceeds a predetermined threshold value, results in a regenerative reversal of the magnetic polarization.

Further in accordance with the latter aspect of the invention, the bottle cover may include a seam formed by overlapping of two edge portions of the sheet material, with the marker element being positioned between the overlapping edge portions and being covered by an outer one of the two edge portions. Also, the seam may be arranged to extend downwardly from the top portion of the bottle, and the marker element may be an elongate strip secured to the sheeting material so that a longitudinal axis of the marker element is substantially parallel to the seam.

According to a further aspect of the invention, there is provided a method of forming a bottle cover for a top and neck of a bottle to be protected from theft, including steps of providing a pre-cut sheet of material having a marker element mounted thereon, the element being selected to provide a signal that is detectable by an electronic article surveillance system, rolling the pre-cut sheet having the marker element mounted thereon to form a skirt portion of the bottle cover, and securing to each other first and second edge portions of the pre-cut sheet. The marker element may be an elongated strip of magnetic material mounted on the sheet in parallel to the first and second edge portions of the sheet and the sheet may be formed of metal foil.

According to yet another aspect of the invention, there is provided a sleeve for an item to be protected from theft, the sleeve including a thermoplastic sheet suitable for being shrink-fitted around the item to be protected, and a marker element secured to the thermoplastic sheet, the marker element being selected to provide a signal that is detectable by an electronic article surveillance system. Preferably the thermoplastic sheet has a first surface which is to be brought into contact with the item, and the marker is secured onto the first surface of the sheet.

The foregoing and other objects and features of the invention will be further understood from the following detailed description of preferred embodiments and practices thereof and from the drawings, wherein like reference numerale identify like components and parts throughout.

### DESCRIPTION OF THE DRAWINGS

Fig. 1 is a schematic perspective view of an installation of conventional EAS detection equipment.
Fig. 2A is a plan view of a pre-cut sheet of material that may be formed into a bottle cover in accordance with the invention.
Fig. 2B is a perspective view of a bottle cover formed in accordance with the invention from the pre-cut sheet of Fig. 2A.
Fig. 2C is a somewhat schematic sectional view of the bottle cover taken at line C-C of Fig. 2B.
Fig. 3 is a perspective view of a wine bottle with the bottle cover of Fig. 2B mounted thereon.
Fig. 4 schematically illustrates attachment of an EAS marker to a bottle by means of a sleeve.

### DESCRIPTION OF PREFERRED EMBODIMENTS

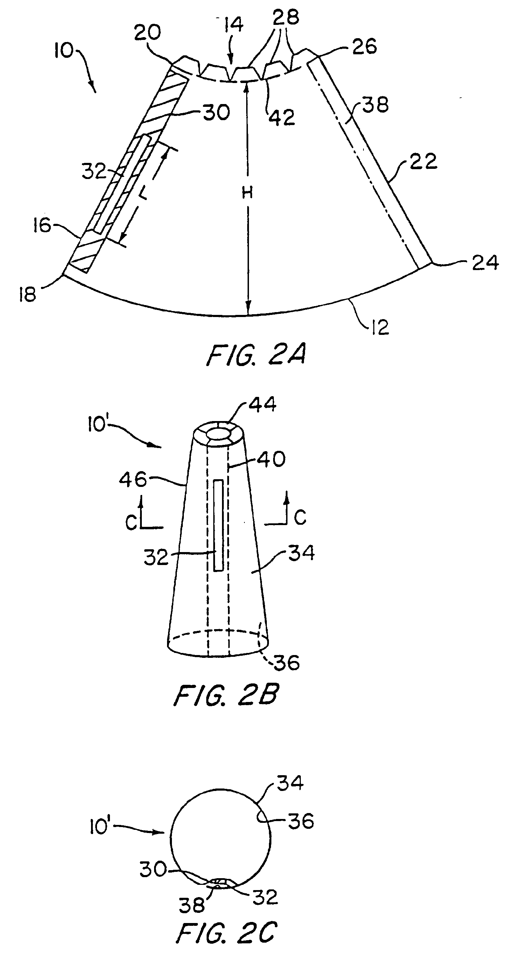

Preferred embodiments of the invention will now be described, initially with reference to Figs. 2A-2C.

Shown in Fig. 2A is a pre-cut sheet 10 from which a bottle cover may be formed in accordance with the invention. The pre-cut sheet 10 may be cut out, for example, from any type of sheeting material conventionally used for bottle covers and/or cap covers for wine bottles. Such sheeting materials may include metallic foils such as aluminum foil, and multi-layer materials which include a metallic foil layer and a plastic layer. Use of a sheeting material formed entirely of plastic or coated paper is also contemplated.

The pre-cut sheet 10 is generally in the shape of a ring segment having a lower or outer arcuate edge 12 and an inner or upper arcuate edge 14 which is concentric with the edge 12. A first straight edge 16 extends between respective ends 18 and 20 of the arcuate edges 12 and 14 and a second straight edge 22 extends between an end 24 of outer arcuate edge 12 and an end 26 of inner arcuate edge 14.

The inner arcuate edge 14 is serrated to form a number of tab portions 28. An adhesive layer 30 (indicated by shading in Fig. 2A) is provided on the sheet 10 along the first straight edge 16. The adhesive layer 30 may be formed by an adhesive substance or gum deposited directly on the sheet 10, or may be provided in the form of two-sided adhesive tape. A ribbon or a strip 32 of highly permeable magnetic material is mounted by adhesion to the adhesive layer 30 and extends in parallel to the adhesive layer 30. The magnetic strip 32 is preferably formed of an amorphous metal alloy processed in accordance with the teachings of U.S. Patent No. 4,686,516 (issued to Humphrey and commonly assigned with the present application) so that the magnetic strip 32 has a magnetic hysteresis loop with a large Barkhausen discontinuity such that the exposure of the magnetic strip to an external magnetic field, whose field strength in the direction opposing the magnetic polarization of the strip exceeds a predetermined threshold value, results in a regenerative reversal of magnetic polarization. As explained in the aforesaid Humphrey patent, such a magnetic strip will produce an extremely sharp signal pulse in response to a suitable alternating interrogation field and the resulting pulse can be readily detected by a conventional type of EAS detection equipment. Magnetic strips of this type are in wide-spread use with EAS equipment marketed by the assignee of the present invention under the trademark "AISLEKEEPER".

The magnetic strip 32 may include or be mounted with one or more control elements (not separately shown). As is well known to those skilled in the art, the control element or elements are formed of a hard or semi-hard magnetic material, and the magnetic state of the control element or element can be changed by conventional techniques to activate or deactivate the magnetic strip 32.

The pre-cut sheet shown in Fig. 2A is rolled to produce a bottle cover- 10' having the configuration shown in Fig. 2B. The side of the sheet 10 shown in Fig. 2A becomes the outside 34 of the somewhat conical bottle cover 10' while the inside surface 36 (shown in phantom in Fig. 2B) of the bottle cover 10' is the reverse of the side of the sheet presented in Fig. 2A. It will be seen that the rolling of the sheet 10 is performed so that adhesive layer 30 is brought into contact with a portion 38 of the reverse side 36. The portion 38 extends adjacent to the second straight edge 22 of the sheet 10. A seam 40 is formed by overlapping of the edge portion 38 and the portion of the sheet on which the adhesive layer 30 is provided. The tab portions 28 are folded inward (along a dashed line 42 shown in Fig. 2A) so as to form a top portion 44 of the bottle cover 10'. The top portion 44 is provided to cover, at least partially, the opening at the top of a bottle on which a bottle cover 10' is to be mounted. A skirt portion 46 (formed of the portion of the sheet 10 between the straight edges 16 and 22) extends downwardly, and flares outwardly, from the top portion 44. The above-mentioned seam 40 extends upwardly and downwardly along the length of the skirt 46 and holds therein the magnetic strip 32. The positioning of the magnetic strip 32 between overlapping edge portions of the rolled sheet 10 is best seen in the cross-sectional view provided in Fig. 2C. Assuming that the cover 10' is formed of an opaque sheeting material, it will be appreciated that the magnetic strip 32 is concealed within the seam 40 of the skirt 46 between the overlapped edge portions of the rolled sheet.

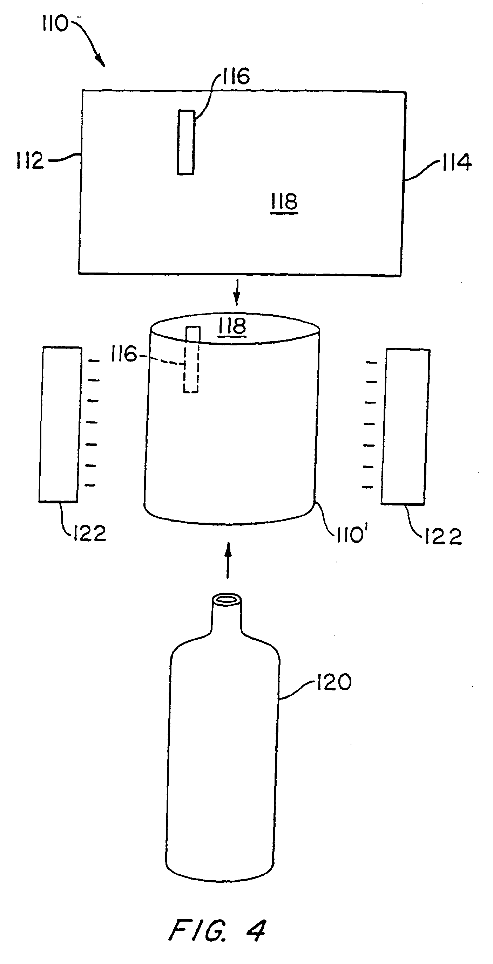

Fig. 3 shows a wine bottle 48 with the bottle cover 10' mounted thereon. The bottle cover 10' may be attached to the bottle 48 by any conventional technique, including adhesive or press-fitting. It will be noted that the skirt portion 46 covers at least a portion of the neck of the bottle 48 and that the top portion 44 covers at least a portion of the opening at the top of the bottle 48. A round sticker or the like (not shown) may be provided above or below the top portion 44 formed by the aforesaid folded tabs 28 in order to completely close the top portion 44 of the bottle cover 10'.

As an alternative to mounting -the magnetic marker strip within the seam of the cover, it is contemplated to attach a free standing marker (not shown) at any place, inside or outside, on the skirt portion of the bottle cover. The free-standing marker may be of the type disclosed in the above-referenced Humphrey patent, formed of a marker strip sandwiched between two layers of paper or plastic with an adhesive on the outside of one of the two layers. The adhesive on the free-standing marker can be used to attach the marker to the bottle cover, either before or after the cut-sheet is rolled to formed the bottle cover. Preferably, the marker is oriented so that its longest dimension extends substantially in a vertical direction and the marker is attached to the pre-cut sheet prior to rolling the sheet, and on the surface of the sheet which becomes the inside surface of the bottle cover.

It is to be observed that the bottle cover 10' in accordance with the invention provides a convenient way of securing a conventional straight and elongated EAS marker strip (like the magnetic strip 32) to a wine bottle. All that is required is that the height (indicated by the dimension H shown in Fig. 2A) of the bottle cover exceed the length (L in Fig. 2A) of the marker strip. Since the length of this kind of marker strip exceeds the diameter of the bottle top, this type of marker strip could not be satisfactorily used in accordance with the teaching of the aforesaid French application no. 2,703,659. In addition, marker elements of the type described in the aforementioned Humphrey patent are not masked when enclosed within a metallic material, and therefore can function satisfactorily with bottle covers made of foil materials which are commonly used for covering the tops and necks of wine bottles.

Further, marker elements of this type can be permanently deactivated so as not to cause subsequent false alarms. This is not of great importance with respect to use of the marker on wine bottles, because wine bottles, once removed from the retail store, usually are not returned to a retail store. However, reliable and permanent deactivation is a significant advantage for markers to be mounted on perfume bottles or the like, since a perfume bottle may likely be carried in a purse and frequently carried in and out of retail stores.

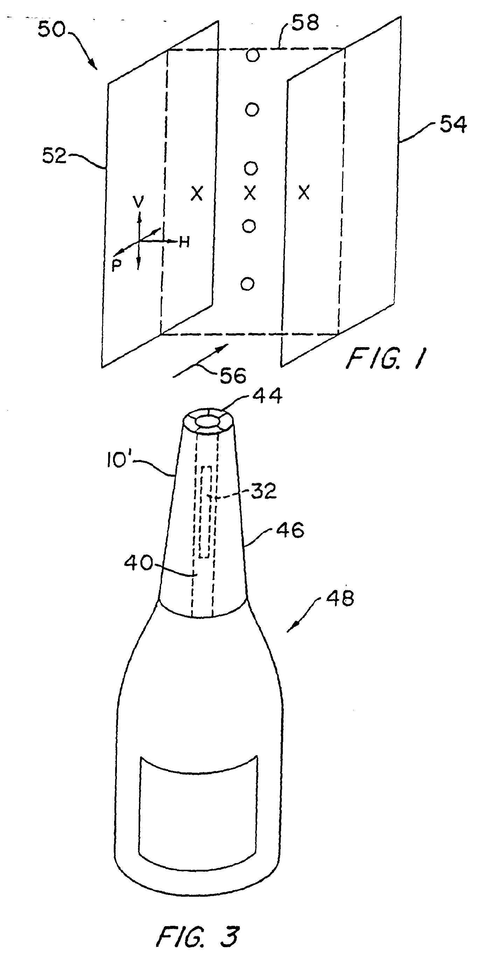

Fig. 1 schematically illustrates an installation 50 of detection equipment, including antenna pedestals 52 and 54 defining therebetween a passage 56. The efficacy of the bottle cover 10' holding an EAS marker in accordance with the invention was tested using such an installation of detection equipment constituted by the above-described "AISLEKEEPER" type of equipment. For the purposes of a test, fifteen test positions were defined in a central portion 58 of the passage 56. The fifteen test positions correspond to the possible combinations of the five vertically extending positions corresponding to open circles in Fig. 1 and the three horizontal positions indicated by X's in Fig. 1. The test was performed with a bottle 48 having the bottle cover 10' mounted thereon as shown in Fig. 3 and held in each of the three orientations indicated, in Fig. 1, as the vertical direction V, the horizontal direction H and the parallel direction P (which is also horizontal but is oriented in parallel to the planes of the antenna pedestals 52 and 54). In general, quite satisfactory detection of the marker 32 was accomplished when the bottle 48 was in the orientations V and P. Less reliable detection was achieved with the bottle oriented in the direction H, but this does not present a significant difficulty, since a potential thief will not easily be able to conceal a bottle in the orientation indicated by the direction H while passing through EAS detection equipment.

Although the invention has, up to this point, primarily been described in an embodiment suitable for use with a wine or champagne bottle, the invention can also be applied to provide covers for bottles containing other types of beverages, and on bottles containing fluids that are not beverages, including condiments or perfume, for example. Moreover, the invention may be used with bottles that contain non-fluid substances, including foods, pills or powders. The term "bottle", as used herein, should be understood to include containers made of plastic or other materials, in addition to glass, and is not limited to containers having a circular profile in horizontal cross-section. Containers having, for example, horizontal cross-sections that are rectangular in profile are also to be embraced within the term "bottle", along with containers shaped as parallelepipeds.

Further, although the present invention has been described herein with reference to an elongate marker element of the type disclosed in the aforesaid Humphrey patent, it is contemplated according to the present invention to mount marker elements of other types and/or other shapes in the skirt portion of a bottle cover. For example, it is contemplated to mount on the skirt portion of a bottle cover a magnetic or magnetomechanical marker (like that disclosed in U.S. Patent No. 4,510,489 issued to Anderson et al.), or an integrated circuit marker capable of generating a multi-bit identification signal. The latter type of marker would be especially useful in applications in which it was desired to prevent counterfeiting as well as to deter theft. Accordingly, the multi-bit marker may advantageously be used in connection with expensive brands of champagne or perfume. It is also contemplated to apply the present invention to markers suitable for radio frequency or microwave EAS systems.

Also, the skirt portion of the bottle cover could be substantially cylindrical, rather than flared. To form a cylindrical skirt portion, it will be recognized that the cut sheet may be substantially rectangular prior to rolling, rather than shaped as a ring segment.

The principles of the invention can also be applied by securing an EAS marker or marker strip to a "sleeve",which is a well-known type of packaging structure applied to bottles or other articles of merchandise. Typically, a sleeve is formed of a thermoplastic sheet which is rolled into a tube and the bottle or other item is inserted into the tube of thermoplastic material. The tube of thermoplastic material is then shrink-fitted by application of heat so that the sleeve is tightly wrapped around the bottle. The sleeve may carry brand name information or other information concerning the product.

According to the invention, a free-standing marker (of the type discussed above in connection with the Humphrey patent), or a marker element, is secured to the sleeve, preferably inside the sleeve and prior to applying the sleeve to the product. An embodiment of the invention, comprising a sleeve bearing a marker, is schematically illustrated in Fig. 4.

A cut-sheet of thermoplastic material is generally indicated by reference numeral 110. The cut-sheet 110 is rectangular with parallel side edges 112 and 114. A free-standing EAS marker 116 (which may be of the Humphrey type) is mounted, by its own adhesive layer or other convenient means, to a surface 118 of the cut-sheet 110. The surface 118 of the sheet 110 is preferably the surface which, upon rolling of the sheet, will become the inside surface of a cylindrical tube or sleeve 110', and accordingly, the surface 118 will come into contact with the product to which the sleeve will be applied. It is also preferred that a longitudinal axis of the marker 116 be oriented parallel to the side edges 112 and 114.

The cut sheet 110 having the marker 116 mounted thereon is rolled to form the sleeve 110', and the edges 112 and 114 are brought together and secured or bonded to each other, by application of heat, adhesive or other conventional technique. A bottle 120 to which the tube-like sleeve 110' is to be applied is then inserted into the sleeve and heat is applied to the sleeve 110' by heating elements 122 so that the sleeve 110' is shrink-fitted around the bottle 120 so as to girdle the bottle. It will be noted that the marker 116 is held between the sleeve 110' and the bottle 120. If the sleeve 110' is formed of an opaque material, or a suitable layer of ink or the like is provided on the sleeve 110', then the marker 116 is concealed by the sleeve 110'.

It is to be understood that the process schematically illustrated in Fig. 4 can be readily applied to items of merchandise other than bottles. It is also to be understood that, rather than attaching a free-standing marker to the sheet 110, a marker strip may be mounted in a seam in the sleeve in similar fashion to the procedure discussed in connection with the bottle cover of Figs. 2A-2C.

It should also be understood that the marker or marker element can be mounted on the cut sheet 110 after cutting the sheet out from a larger web of material; alternatively, markers or marker elements can be applied to a continuous web at appropriate positions before cutting out appropriately sized sheets from the web.

It should further be appreciated that the technique disclosed in connection with Fig. 4 for mounting a marker on a product by use of a sleeve can readily be applied in connection with a bottle cover formed of a shrink-fitted plastic material.

As used herein and in the following claims, "tube" should be understood to include not only a substantially cylindrical structure as shown in Fig. 4, but also structures having one or more longitudinally extended gaps (which may extend for the entire length of the tube), whether or not bridged by bridging elements or the like.

Various changes to the above-described embodiments, and modifications in the described practices, may be introduced without departing from the invention. The particularly preferred embodiments are thus intended in an illustrative and not limiting sense. The scope of the invention is set forth in the following claims.

## Claims

1. A bottle cover (10', 110') for a top and neck of a bottle (48) to be protected from theft, said cover comprising:
a top portion (44) for at least partially covering an opening of the bottle (48);
a skirt portion (46) extending downwardly from said top portion (44), for at least partially covering the neck of the bottle (48); and
a marker element (32, 116) mounted to said skirt portion (46), said marker element (32, 116) being selected to provide a signal that is detectable by an electronic article surveillance system (50),
wherein
said skirt portion (46) includes a seam (40) formed by overlapping of two edge portions (38) of a sheet rolled to form said skirt portion (46), said marker element (32, 116) being positioned between said overlapping edge portions (38) so as to be covered by an outer one of said two edge portions (38).

2. A bottle cover (10', 110') according to claim 1,
**characterized in that**
further comprises an adhesive layer (30) for attaching said overlapping edge portions (38) to each other.

3. A bottle cover (10', 110') according to claim 2,
**characterized in that**
said marker element (32) is held on said adhesive layer (30).

4. A bottle cover (10', 110') according to claim 1,
**characterized in that**
a sheet (10) is rolled to form said skirt portion (46) and is opaque and said marker element (32, 116) is concealed by said outer one of said two edge portions (38).

5. A bottle cover (10', 110') according to claim 1, formed from a metal sheet.

6. A bottle cover (10', 110') according to claim 1, formed from a sheet of multi-layer material including a metallic layer and a plastic layer.

7. A bottle cover (10', 110') according to claim 1,
**characterized in that**
said marker element (32, 116) includes a continuous strip of magnetic material.

8. A bottle cover (10', 110') according to claim 7,
**characterized in that**
said marker element (32, 116) extends in a downward direction relative to said top portion (44) of said bottle cover (10').

9. A bottle cover (10', 110') according to claim 1,
**characterized in that**
said marker element (32, 116) includes a magnetostrictive member and a biasing member mounted spaced apart from said magnetostrictive member, said biasing member, when magnetically biased, for causing said magnetostrictive member to be mechanically resonant when exposed to an alternating electromagnetic field generated at a selected frequency by an electronic article surveillance system (50).

10. A bottle cover (10', 110') according to claim 1,
**characterized in that**
said marker element (32, 116) is formed of an amorphous metal alloy and exhibits a discontinuous hysteresis characteristic.

11. A bottle cover (10', 110') according to claim 1,
**characterized in that**
said cover (10') comprising a sheeting material shaped to correspond, at least partially, to a neck portion of the bottle (48); and
said EAS marker element (32) is secured to said sheeting material, said marker element (32) being formed of a magnetic material having a magnetic hysteresis loop with a large Barkhausen discontinuity such that exposure of said element to an external magnetic field, whose field strength in the direction opposing the magnetic polarization of said element exceeds a predetermined threshold value, results in a regenerative reversal of said magnetic polarization.

12. A bottle cover (10') according to claim 11,
**characterized in that**
said seam (40) is arranged to extend downwardly from the top portion (44) of the bottle (48), and said marker element (32) is an elongate strip and is secured to said sheeting material (10) so that a longitudinal axis of said marker element (32) is substantially parallel to said seam (40).

13. A bottle cover (110') according to one of the preceding claims, wherein a sheet (110) is rolled to form a sleeve.

14. A bottle cover (110) according to claim 13, wherein the sheet material forming the sleeve (110') is a thermoplastic heat-shrinkable material.

15. A bottle cover according to claims 13 and 14,
**characterized in that**
the marker element (116) is secured to the sleeve prior to applying the sleeve (110') to the product.

16. A method of forming a bottle cover for a top and neck of a bottle to be protected from theft, the method comprising the steps of:
(a) providing a pre-cut sheet of material;
(b) forming a layer of adhesive material along a first edge of said sheet on one side of said sheet;
(c) mounting on said layer of adhesive material an elongate marker element extending in parallel to said first edge of said sheet, said element being selected to provide a signal that is detectable by an electronic article surveillance system; and
(d) rolling said sheet to bring said layer of adhesive material into adhering contact with a portion of a second side of said sheet along a second edge of said sheet, with said marker element engaged between said layer of adhesive material and said portion of said second side of said sheet.

17. A method according to claim 16, wherein said pre-cut sheet of material is in the shape of a ring segment having an outer arcuate edge and an inner arcuate edge concentric with the outer arcuate edge and with said first edge of said sheet extending between respective ends of said outer and inner arcuate edges.

18. A method according to claim 17, wherein said inner arcuate edge is serrated to provide a plurality of tab portions along said inner arcuate edge, the method further comprising the step of folding said tab portions to form a top portion of the bottle cover.

19. A method according to claim 16, wherein said step of forming said adhesive layer includes applying two-sided adhesive tape along said first edge of said sheet.

20. A method according to claim 16, wherein said marker element includes a continuous strip of magnetic material.

21. A method according to claim 16, wherein said marker element includes a magnetostrictive member and a biasing member mounted spaced apart from said magnetostrictive member, said biasing member, when magnetically biased, for causing said magnetostrictive member to be mechanically resonant when exposed to an alternating electromagnetic field generated at a selected frequency by an electronic article surveillance system.

## Patentansprüche

1. Flaschenabdeckung (10', 110') für eine Oberseite und einen Hals einer Flasche (48) zum Diebstahlschutz, die Abdeckung aufweisend:
einen oberen Abschnitt (44) zum mindestens Teilabdecken einer Öffnung der Flasche (48);
einen Schürzenabschnitt (46), der sich von dem oberen Abschnitt (44) nach unten erstreckt, zum mindestens Teilabdecken des Halses der Flasche (48); und
ein Markierungselement (32, 116), das an dem Schürzenabschnitt (46) angebracht ist, wobei das Markierungselement (32, 116) zum Vorsehen eines Signals ausgewählt ist, das von einem elektronischen Artikelüberwachungssystem (50) erkennbar ist, wobei
zu dem Schürzenabschnitt (46) eine Naht (40) gehört, die durch Überlappen von zwei Kantenabschnitten (38) einer Bahn ausgebildet ist, welche zum Ausbilden des Schürzenabschnitts (46) gerollt ist, wobei das Markierungselement (32, 116) derart zwischen den überlappenden Kantenabschnitten (38) angeordnet ist, dass es durch einen äußeren der zwei Kantenabschnitte (38) abgedeckt ist.

2. Flaschenabdeckung (10', 110') nach Anspruch 1, **dadurch gekennzeichnet, dass**
sie ferner eine Klebeschicht (30) zum Anbringen der überlappenden Kantenabschnitte (38) aneinander aufweist.

3. Flaschenabdeckung (10', 110') nach Anspruch 2, **dadurch gekennzeichnet, dass**
das Markierungselement (32) auf der Klebeschicht (30) gehalten ist.

4. Flaschenabdeckung (10', 110') nach Anspruch 1, **dadurch gekennzeichnet, dass**
eine Bahn (10) zum Ausbilden des Schürzenabschnitts (46) gerollt ist und undurchsichtig ist, und dass das Markierungselement (32, 116) durch den äußeren der zwei Kantenabschnitte (38) verborgen ist.

5. Flaschenabdeckung (10', 110') nach Anspruch 1, ausgebildet aus einem Blech.

6. Flaschenabdeckung (10', 110') nach Anspruch 1, ausgebildet aus einer Folie aus Mehrschichtmaterial, zu dem eine Metallschicht und eine Kunststoffschicht gehören.

7. Flaschenabdeckung (10', 110') nach Anspruch 1, **dadurch gekennzeichnet, dass**
zu dem Markierungselement (32, 116) ein fortlaufender Streifen aus magnetischem Material gehört.

8. Flaschenabdeckung (10', 110') nach Anspruch 7, **dadurch gekennzeichnet, dass**
sich das Markierungselement (32, 116) bezüglich des oberen Abschnitts (44) der Flaschenabdeckung (10') nach unten erstreckt.

9. Flaschenabdeckung (10', 110') nach Anspruch 1, **dadurch gekennzeichnet, dass**
zu dem Markierungselement (32, 116) ein magnetostriktives Glied und ein Vorspannglied gehören, welches beabstandet von dem magnetostriktiven Glied angebracht ist, wobei das Vorspannglied, wenn es vormagnetisiert ist, zum Bewirken dient, dass das magnetostriktive Glied mechanisch resonant ist, wenn es einem elektromagnetischen Wechselfeld ausgesetzt ist, das auf einer ausgewählten Frequenz durch ein elektronisches Artikelüberwachungssystem (50) erzeugt wird.

10. Flaschenabdeckung (10', 110') nach Anspruch 1, **dadurch gekennzeichnet, dass**
das Markierungselement (32, 116) aus einer amorphen Metalllegierung ausgebildet ist und ein diskontinuierliches Hysteresekennzeichen aufweist.

11. Flaschenabdeckung (10', 110') nach Anspruch 1, **dadurch gekennzeichnet, dass**
die Abdeckung (10') ein Verkleidungsmaterial aufweist, das derart geformt ist, dass es mindestens teilweise einem Halsabschnitt der Flasche (48) entspricht; und das EAS-Markierungselement (32) an dem Verkleidungsmaterial befestigt ist, wobei das Markierungselement (32) aus einem magnetischen Material mit einer magnetischen Hystereseschleife mit einer hohen Barkhausen-Diskontinuität ausgebildet ist, sodass, wenn das Element einem externen Magnetfeld ausgesetzt ist, dessen Feldstärke in der Richtung, die der magnetischen Polarisation des Elements entgegengesetzt ist, einen vorgegebenen Schwellenwert übersteigt, dies zu einer regenerativen Umkehrung der magnetischen Polarisation führt.

12. Flaschenabdeckung (10') nach Anspruch 11, **dadurch gekennzeichnet, dass**
die Naht (40) derart angeordnet ist, dass sie sich vom oberen Abschnitt (44) der Flasche (48) nach unten erstreckt, und das Markierungselement (32) ein gestreckter Streifen ist und derart an dem Verkleidungsmaterial (10) befestigt ist, dass eine Längsachse des Markierungselements (32) im Wesentlichen parallel zu der Naht (40) verläuft.

13. Flaschenabdeckung (110') nach einem der vorhergehenden Ansprüche, wobei eine Bahn (110) zum Ausbilden einer Hülse gerollt ist.

14. Flaschenabdeckung (110) nach Anspruch 13, wobei das Verkleidungsmaterial, das die Hülse (110') ausbildet, ein thermoplastisches Wärmeschrumpfmaterial ist.

15. Flaschenabdeckung nach einem der Ansprüche 13 oder 14, **dadurch gekennzeichnet, dass**
das Markierungselement (116) vor dem Anbringen der Hülse (110') an dem Erzeugnis an der Hülse befestigt ist.

16. Verfahren zum Ausbilden einer Flaschenabdeckung für eine Oberseite und einen Hals einer Flasche zum Diebstahlschutz, wobei das Verfahren folgende Schritte aufweist:
(a) Bereitstellen einer vorgeschnittenen Materialbahn;
(b) Ausbilden einer Klebematerialschicht entlang einer ersten Kante der Bahn auf einer Seite der Bahn;
(c) Anbringen eines gestreckten Markierungselements auf der Klebematerialschicht parallel zu der ersten Kante der Bahn, wobei das Element zum Vorsehen eines Signals ausgewählt ist, das von einem elektronischen Artikelüberwachungssystem erkennbar ist; und
(d) Rollen der Bahn, um die Klebematerialschicht in Klebekontakt mit einem Abschnitt einer zweiten Seite der Bahn entlang einer zweiten Kante der Bahn zu bringen, wobei das Markierungselement zwischen der Klebematerialschicht und dem Abschnitt der zweiten Seite der Bahn in Eingriff genommen ist.

17. Verfahren nach Anspruch 16, wobei die vorgeschnittene Materialbahn in der Form eines Kreisringsegments mit einer äußeren bogenförmigen Kante und einer inneren bogenförmigen Kante ist, die mit der äußeren bogenförmigen Kante und mit der ersten Kante der Bahn, die sich zwischen jeweiligen Enden der äußeren und inneren bogenförmigen Kanten erstreckt, konzentrisch ist.

18. Verfahren nach Anspruch 17, wobei die innere bogenförmige Kante zur Bereitstellung einer Vielzahl von Laschenabschnitten entlang der inneren bogenförmigen Kante gezahnt ist, wobei das Verfahren ferner den Schritt des Faltens der Laschenabschnitte zum Ausbilden eines oberen Abschnitts der Flaschenabdeckung aufweist.

19. Verfahren nach Anspruch 16, wobei zu dem Schritt des Ausbildens der Klebeschicht das Aufbringen von doppelseitigem Klebeband entlang der ersten Seite der Bahn gehört.

20. Verfahren nach Anspruch 16, wobei zu dem Markierungselement ein fortlaufender Streifen aus magnetischem Material gehört.

21. Verfahren nach Anspruch 16, wobei zu dem Markierungselement ein magnetostriktives Glied und ein Vorspannglied gehören, welches beabstandet von dem magnetostriktiven Glied angebracht ist, wobei das Vorspannglied, wenn es vormagnetisiert ist, zum Bewirken dient, dass das magnetostriktive Glied mechanisch resonant ist, wenn es einem elektromagnetischen Wechselfeld ausgesetzt ist, das auf einer ausgewählten Frequenz durch ein elektronisches Artikelüberwachungssystem erzeugt ist.

## Revendications

1. Couvre-bouteille (10', 110') pour une partie supérieure et un goulot d'une bouteille (48) qui doit être protégée contre le vol, ledit couvre-bouteille comprenant:
une partie supérieure (44) destinée à recouvrir au moins partiellement une ouverture de la bouteille (48) ;
une partie formant jupe (46) s'étendant vers le bas à partir de ladite partie supérieure (44), destinée à recouvrir au moins partiellement le goulot de la bouteille (48) ; et
un élément marqueur (32, 116) monté sur ladite partie formant jupe (46), ledit élément marqueur (32, 116) étant choisi de manière à émettre un signal qui peut être détecté par un système électronique de surveillance d'articles (50),
dans lequel:
ladite partie formant jupe (46) comprend un joint (40) se composant de deux parties formant bords (38) qui se chevauchent d'une feuille enroulée de manière à former ladite partie formant jupe (46), ledit élément marqueur (32, 116) étant positionné entre lesdites parties formant bords (38) qui se chevauchent de manière à être recouvert par une partie extérieure parmi lesdites deux parties formant bords (38).

2. Couvre-bouteille (10', 110') selon la revendication 1, **caractérisé en ce qu'**il comprend en outre une couche adhésive (30) destinée à fixer l'une sur l'autre lesdites parties formant bords (38) qui se chevauchent.

3. Couvre-bouteille (10', 110') selon la revendication 2, **caractérisé en ce que** ledit élément marqueur (32) est retenu sur ladite couche adhésive (30).

4. Couvre-bouteille (10', 110') selon la revendication 1, **caractérisé en ce qu'**une feuille (10) est enroulée de manière à former ladite partie formant jupe (46) et est opaque, et ledit élément marqueur (32, 116) est caché par ladite partie extérieure parmi lesdites deux parties formant bords (38).

5. Couvre-bouteille (10', 110') selon la revendication 1, réalisé dans une feuille métallique.

6. Couvre-bouteille (10', 110') selon la revendication 1, réalisé dans une feuille d'un matériau multicouche comprenant une couche métallique et une couche en plastique.

7. Couvre-bouteille (10', 110') selon la revendication 1, **caractérisé en ce que** ledit élément marqueur (32, 116) comprend une bande continue de matériau magnétique.

8. Couvre-bouteille (10', 110') selon la revendication 7, **caractérisé en ce que** ledit élément marqueur (32, 116) s'étend dans une direction orientée vers le bas par rapport à ladite partie supérieure (44) dudit couvre-bouteille (10').

9. Couvre-bouteille (10', 110') selon la revendication 1, **caractérisé en ce que** ledit élément marqueur (32, 116) comprend un élément magnétostrictif et un élément de polarisation monté en étant espacé par rapport audit élément magnétostrictif, ledit élément de polarisation, lorsqu'il est polarisé de manière magnétique, étant destiné à amener ledit élément magnétostrictif à devenir résonant du point de vue mécanique lorsqu'il est exposé à un champ magnétique alternatif généré à une fréquence choisie par un système électronique de surveillance d'articles (50).

10. Couvre-bouteille (10', 110') selon la revendication 1, **caractérisé en ce que** ledit élément marqueur (32, 116) est réalisé dans un alliage métallique amorphe et présente une caractéristique d'hystérésis discontinue.

11. Couvre-bouteille (10', 110') selon la revendication 1, **caractérisé en ce que** ledit couvre-bouteille (10') comprend un matériau de recouvrement mis en forme de manière à correspondre, au moins partiellement, à une partie formant goulot de la bouteille (48) ; et
ledit élément marqueur (32) du système électronique de surveillance d'articles est fixé sur ledit matériau de recouvrement, ledit élément marqueur (32) étant réalisé dans un matériau magnétique présentant un cycle d'hystérésis magnétique avec une grande discontinuité de Barkhausen de telle sorte que l'exposition dudit élément à un champ magnétique externe, dont l'intensité de champ dans la direction opposée à la polarisation magnétique dudit élément dépasse une valeur seuil prédéterminée, provoque une inversion régénératrice de ladite polarisation magnétique.

12. Couvre-bouteille (10') selon la revendication 11, **caractérisé en ce que** ledit joint (40) est agencé de manière à s'étendre vers le bas à partir de la partie supérieure (44) de la bouteille (48), et ledit élément marqueur (32) est une bande allongée et il est fixé sur ledit matériau de recouvrement (10) de telle sorte qu'un axe longitudinal dudit élément marqueur (32) soit sensiblement parallèle audit joint (40).

13. Couvre-bouteille (110') selon l'une quelconque des revendications précédentes, dans lequel une feuille (110) est enroulée de manière à former un manchon.

14. Couvre-bouteille (110) selon la revendication 13, dans lequel le matériau en feuille qui forme le manchon (110') est un matériau thermoplastique thermorétractable.

15. Couvre-bouteille selon les revendications 13 et 14, **caractérisé en ce que** l'élément marqueur (116) est fixé sur le manchon avant l'application du manchon (110') sur le produit.

16. Procédé de formation d'un couvre-bouteille pour une partie supérieure et un goulot d'une bouteille qui doit être protégée contre le vol, le procédé comprenant les étapes consistant à :
(a) fournir une feuille prédécoupée de matériau ;
(b) former une couche de matériau adhésif le long d'un premier bord de ladite feuille sur une face de ladite feuille ;
(c) monter sur ladite couche de matériau adhésif un élément marqueur allongé qui s'étend parallèlement audit premier bord de ladite feuille, ledit élément étant choisi de manière à émettre un signal qui peut être détecté par un système électronique de surveillance d'articles ; et
(d) enrouler ladite feuille de manière à amener ladite couche de matériau adhésif à venir en contact par adhésion avec une partie d'une seconde face de ladite feuille le long d'un second bord de ladite feuille, ledit élément marqueur étant mis en prise entre ladite couche de matériau adhésif et ladite partie de ladite seconde face de ladite feuille.

17. Procédé selon la revendication 16, dans lequel ladite feuille prédécoupée de matériau présente la forme d'un segment annulaire ayant un bord extérieur arqué et un bord intérieur arqué concentrique avec le bord extérieur arqué, et ledit premier bord arqué de ladite feuille s'étendant entre les extrémités respectives desdits bords extérieur et intérieur arqués.

18. Procédé selon la revendication 17, dans lequel ledit bord intérieur arqué est cannelé de manière à fournir une pluralité de parties formant pattes le long dudit bord intérieur arqué, le procédé comprenant en outre l'étape consistant à plier lesdites parties formant pattes de manière à former une partie supérieure du couvre-bouteille.

19. Procédé selon la revendication 16, dans lequel ladite étape consistant à former ladite couche adhésive comprend l'application d'un ruban adhésif à double face le long dudit premier bord de ladite feuille.

20. Procédé selon la revendication 16, dans lequel ledit élément marqueur comprend une bande continue de matériau magnétique.

21. Procédé selon la revendication 16, dans lequel ledit élément marqueur comprend un élément magnétostrictif et un élément de polarisation monté en étant espacé par rapport audit élément magnétostrictif, ledit élément de polarisation, lorsqu'il est polarisé de manière magnétique, étant destiné à amener ledit élément magnétostrictif à devenir résonant du point de vue mécanique lorsqu'il est exposé à un champ magnétique alternatif généré à une fréquence choisie par un système électronique de surveillance d'articles.
